# EUROPEAN PATENT APPLICATION

(11) **EP 4 668 617 A1**
(43) Date of publication of application: **24.12.2025**
(21) Application number: 24886028.0
(22) Date of filing: 20.09.2024
(51) Int. Cl.: H04B 10/114, H04B 10/03, H05B 47/10, H01M 10/42

(54) **BATTERY MANAGEMENT SYSTEM AND COMMUNICATION MANAGEMENT METHOD THEREFOR**

(30) Priority: 31.10.2023 KR 20230148004
(71) Applicant: LG Energy Solution, Ltd., Seoul 07335 (KR)
(72) Inventor: KIM, Youngbeom, Daejeon 34122 (KR); KIM, Tae Youn, Daejeon 34122 (KR); YOON, Sunwoo, Daejeon 34122 (KR); PARK, Hye Jin, Daejeon 34122 (KR)
(74) Representative: Hoffmann Eitle
(86) International application number: PCT/KR2024/014193
(87) International publication number: WO 2025/095350

(57) **Abstract**

Disclosed is a battery management system for communicating, as a master board, with a plurality of slave boards, the system comprising: a light-emitting element performing wireless communication with the plurality of slave boards, each including a light-receiving element; a resistor circuit which is connected to the light-emitting elements in series and which includes a plurality of resistors that can be connected in parallel to each other according to the opening/closing of a switch; and a controller, wherein the controller controls at least some of switches such that the resistance of the resistance circuit is reduced by connecting in parallel at least some of the plurality of resistors in response to the detection of a decrease in the intensity of light transmitted from the light-emitting element to at least some of the light-receiving elements.

## Description

### Technical Field

This application claims the benefit of Korean Patent Application No. 10-2023-0148004, filed on October 31, 2023, in the Korean Intellectual Property Office, the disclosure of which is incorporated herein by reference.

The present disclosure relates to a battery management system that is a master board for managing communication with a plurality of slave boards and a communication management method thereof.

### Background Art

Various topologies may be applied to a battery management system, one of which is a master-slave structure. In this structure, a single master board manages a plurality of slave boards, and with regard to such structure, a method of wireless communication of the master board with the slave board is well-known, and the wireless communication method is widely used due to the advantage of not having a wiring problem. The wireless communication method includes various manners, and it is known that an optical communication manner using a light-emitting element such as a diode is mainly used. Although the optical communication manner using the light-emitting element has many advantages, a reduced light transmission capability due to the deterioration of the light-emitting element or dust and condensation may lead to a worsening communication quality, and there is a problem in that maintenance thereon is difficult. Therefore, for a battery management system to which optical communication using a light-emitting element is applied, a manner for diagnosing and easily maintaining a communication state is required.

### Detailed Description of the Invention

### Technical Goals

Disclosed example embodiments are to provide an electronic apparatus and a method of providing information thereof. Specifically, a purpose is to enable diagnosing and easily maintaining a communication state between a master board and a slave board through a battery management system that is a master board for managing communication with a plurality of slave boards and a communication management method thereof.

The example embodiments are not limited to the technical goals described above, and other technical goals may be inferred from the example embodiments below.

### Technical solutions

An aspect of the present disclosure may provide a battery management system that is a master board and in communication with a plurality of slave boards, the battery management system including a light-emitting element configured to perform wireless communication with the plurality of slave boards including light-receiving elements, a resistor circuit connected to the light-emitting element in series and including a plurality of resistors connectable in parallel to each other based on opening and closing of switches, and a controller, and the controller may be configured to, in response to detecting a decrease in intensity of light transmitted from the light-emitting element to at least one of the light-receiving elements, control at least one of the switches so that a resistance magnitude of the resistor circuit decreases by connecting at least one of the plurality of resistors in parallel.

In an example embodiment of the present disclosure, an amount of light emitted by the light-emitting element may increase as the resistance magnitude of the resistor circuit decreases and a current flowing in the light-emitting element increases.

Further, in an example embodiment of the present disclosure, the controller may be configured to, in response to detecting the decrease in the intensity of the light, control the at least one of the switches so that the current for the intensity of the light transmitted to the at least one of the light-receiving elements to correspond to an initial value flows in the light-emitting element.

Further, in an example embodiment of the present disclosure, the controller may be configured to control the at least one of the switches so that the at least one of the plurality of resistors selected based on the intensity of the light in which the decrease is detected and the initial value are connected in parallel.

Further, in an example embodiment of the present disclosure, the controller may be configured to calculate a recovery value based on the intensity of the light and the initial value and then select the at least one of the plurality of resistors, when connected in parallel, for the resistance magnitude of the resistor circuit to correspond to the recovery value.

Further, in an example embodiment of the present disclosure, the controller may be configured to select the at least one of the plurality of resistors further based on a rate of change of the intensity of the light but select the at least one of the plurality of resistors so that the resistance magnitude is less as the rate of change is greater.

Further, in an example embodiment of the present disclosure, the decrease in the intensity of the light may be identified by detecting a decrease to or below a threshold value in a magnitude of a current generated as the light from the light-emitting element is transmitted to the at least one of the light-receiving elements.

Further, in an example embodiment of the present disclosure, the decrease in the magnitude of the current may be detected by periodically measuring the magnitude of the current generated as the at least one of the light-receiving elements receive the light from the light-emitting element.

Further, in an example embodiment of the present disclosure, the decrease in the intensity of the light may be detected by identifying disconnection of communication connected as the light from the light-emitting element is transmitted to the at least one of the light-receiving elements.

Further, in an example embodiment of the present disclosure, the controller may be configured to identify cause information about the decrease in the intensity of the light based on at least one of (i) decrease information about a decrease amount of a magnitude of a current generated as the light from the light-emitting element is received, which is detected in a specific light-receiving element that is the at least one of the light-receiving elements, (ii) information on a location of the specific light-receiving element, and (iii) information on a ratio of a number of the specific light-receiving element to a number of the light-receiving elements.

Further, in an example embodiment of the present disclosure, the controller may be configured to identify cause information about the decrease in the intensity of the light based on at least one of information on turbidity and information on condensation within a battery pack, which are obtained based on one or more sensors included in the battery pack operating in interconnection with the battery management system.

Further, in an example embodiment of the present disclosure, the controller may be configured to, when it is identified based on at least one of the information on turbidity and the information on condensation within the battery pack that a cause corresponding to the cause information is resolved, control the at least one of the switches so that the at least one of the plurality of resistors connected in parallel are disconnected.

Further, in an example embodiment of the present disclosure, the battery management system may further include a communication part communication-connected to a user terminal or a control part of a car, and the controller may be configured to, when a switch of a threshold ratio or higher among the switches of the resistor circuit is closed, provide a caution notification related to the intensity of the light to the user terminal or the control part of the car through the communication part.

Further, in an example embodiment of the present disclosure, the controller may be configured to provide the caution notification including cause information about the decrease in the intensity of the light to the user terminal or the control part of the car.

Further, in an example embodiment of the present disclosure, the controller may be configured to provide the caution notification including information on power consumed in the resistor circuit in a state that the switch of the threshold ratio or higher is closed to the user terminal or the control part of the car.

Further, in an example embodiment of the present disclosure, the controller may be configured to sequentially control the at least one of the switches so that the resistance magnitude of the resistor circuit decreases sequentially by sequentially connecting the at least one of the plurality of resistors in parallel whenever the decrease in the intensity of the light is detected.

Another aspect of the present disclosure may provide a communication management method of a battery management system, the communication management method including detecting a decrease in intensity of light transmitted from a light-emitting element to at least one of light-receiving elements included in a plurality of slave boards, by controlling at least one of switches of a resistor circuit so that at least one of a plurality of resistors included in the resistor circuit connected to the light-emitting element in series are connected in parallel and a resistance magnitude of the resistor circuit decreases, controlling an amount of light emitted by the light-emitting element to increase as a current flowing in the light-emitting element increases, and when a switch of a threshold ratio or higher among the switches is closed, providing a caution notification related to the intensity of the light to a user terminal or a control part of a car.

Details of example embodiments are included in the detailed description and drawings.

### Effects of the Invention

According to example embodiments, one or more of the following effects may be achieved.

According to example embodiments of this specification, it is possible to diagnose and easily maintain a communication state of a battery management system to which optical communication using a diode is applied.

In addition, according to example embodiments of this specification, it is possible to, when a decrease in intensity of light transmitted to a light-receiving element is detected, recover the intensity of light by connecting in parallel a plurality of resistors included in a resistor circuit connected to a light-emitting element in series.

In addition, according to example embodiments of this specification, it is also possible to, when resistors of a threshold ratio or higher among a plurality of resistors included in a resistor circuit connected to a light-emitting element in series are connected in parallel, provide a notification to a user terminal and induce a repair of the light-emitting element.

The effects achieved by various example embodiments of the present disclosure are not limited to those described above, and other unstated effects may be clearly understood by those skilled in the art from the appended claims.

### Brief Description of Drawings

FIG. 1 is a diagram illustrating a battery management system that manages communication according to an example embodiment.
FIG. 2 is a diagram illustrating an interconnection relationship between a light-emitting element, a resistor circuit, and a controller according to an example embodiment.
FIG. 3 is a flowchart illustrating a communication management method of a battery management system according to an example embodiment.
FIGS. 4A to 4C are example diagrams of a caution notification sent to a user terminal according to an example embodiment.
FIG. 5 is an example diagram illustrating a case in which light from a light-emitting element is not transmitted only to a slave board in some directions due to an obstruction factor according to an example embodiment.

### Mode for Carrying Out the Invention

Terms used in example embodiments are selected from currently widely used general terms when possible while considering the functions in the present disclosure. However, the terms may vary depending on the intention of a person skilled in the art, precedents, the emergence of new technology, and the like. Further, in certain cases, there are also terms arbitrarily selected by the applicant, and in these cases, the meaning will be described in detail in the corresponding descriptions. Therefore, the terms used in the present disclosure are not to be construed simply as its designation but based on the meaning of the term and the overall context of the present disclosure.

Throughout the specification, when a part is described as "comprising or including" a component, it does not exclude another component but may further include another component unless otherwise stated.

The expression "at least one of a, b, and c" described throughout the specification may include "a alone," "b alone," "c alone," "a and b," "a and c," "b and c," or "all of a, b, and c."

In the present disclosure, a "terminal" may be implemented as a computer or a portable terminal capable of accessing a server or another terminal through a network. Here, the computer may include, for example, a notebook, a desktop computer, and/or a laptop computer which are equipped with a web browser. The portable terminal may be a wireless communication apparatus ensuring portability and mobility and include (but is not limited to) any type of handheld wireless communication apparatus, for example, a tablet PC, a smartphone, a communication-based terminal such as international mobile telecommunication (IMT), code division multiple access (CDMA), W-code division multiple access (W-CDMA), long term evolution (LTE), or the like.

Hereinafter, example embodiments of the present disclosure will be described in detail with reference to the accompanying drawings so that those of ordinary skill in the art to which the present disclosure pertains may easily implement example embodiments of the present disclosure. However, the present disclosure may be implemented in multiple different forms and is not limited to the example embodiments described herein.

Hereinafter, example embodiments of the present disclosure will be described in detail with reference to the accompanying drawings.

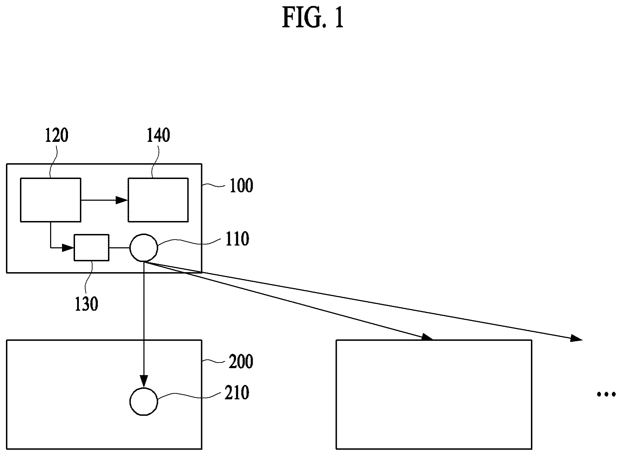

FIG. 1 is a diagram illustrating a battery management system that manages communication according to an example embodiment.

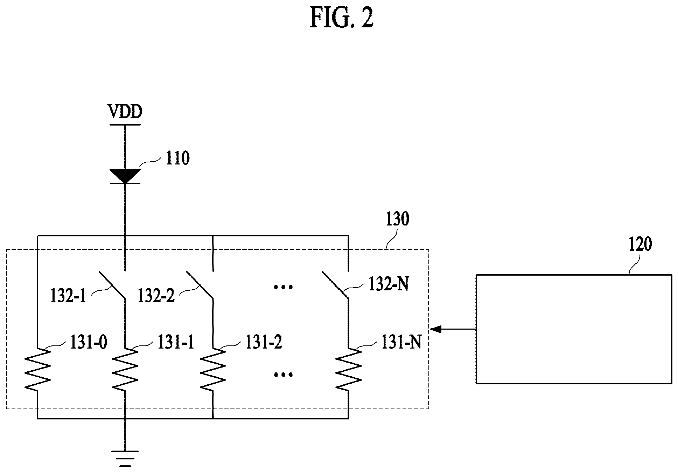

Referring to FIG. 1, the present disclosure basically assumes a case in which a battery management system 100 as a master board is in wireless communication with a plurality of slave boards, and for convenience of description, FIG. 1 only illustrates one slave board 200 among the plurality of slave boards and a light-receiving element 210 thereof. The battery management system 100 may include a light-emitting element 110 for performing wireless communication and a resistor circuit 130 which is a configuration connected thereto in series and used for communication management. The light-emitting element 110 may be implemented by a photodiode but is not limited thereto. An internal switch of the resistor circuit 130 may be controlled by a controller 120 and a specific configuration may be described later with reference to FIG. 2. In addition, the battery management system 100 may include a communication part 140 that is used to communicate with external apparatuses and which may operate in interconnection with the controller 120.

FIG. 1 illustrates a case in which a signal is transmitted from the battery management system 100 to the slave board 200 for convenience of description, and signal transmission in an opposite direction is merely omitted and is also regarded as being included in the scope of the present disclosure. In other words, the battery management system 100 may include the light-receiving element, and the slave board may include the light-emitting element that may be used to transmit an optical signal to such battery management system 100. In other words, the battery management system 100 and each slave board may include both the light-emitting element and the light-receiving element, and elements used for unidirectional communication are only illustrated in the drawings for convenience of description. Further, in this case, the battery management system and each slave board may, using a single element, for example, a photodiode, cause the corresponding single element to perform roles of both the light-emitting element and the light-receiving element. Additionally, a communication management method of the present disclosure to be described below and a configuration therefor may also be applied to management of communication from the slave board to the battery management system 100. In other words, each slave board may also include a configuration performing a similar function to the controller 120 and the resistor circuit 130 and operate similarly to a manner to be described below and may be managed so that communication to the master board may be maintained.

Hereinafter, an interconnection relationship between the light-emitting element 110, the resistor circuit 130, and the controller 120 is described with reference to FIG. 2.

FIG. 2 is a diagram illustrating an interconnection relationship between a light-emitting element, a resistor circuit, and a controller according to an example embodiment.

Referring to FIG. 2, it may be identified that the light-emitting element 110 and the resistor circuit 130 are connected in series and interval voltage VDD is applied thereto. Here, the resistor circuit 130 may include a basic load resistor 131-0 and include a plurality of resistors 131-1 to 131-N that may be connected thereto in parallel and a plurality of switches 132-1 to 132-N that may control whether these are connected in parallel. In addition, the plurality of switches 132-1 to 132-N as above may be controlled by the controller 120. Here, N is an integer greater than or equal to 2.

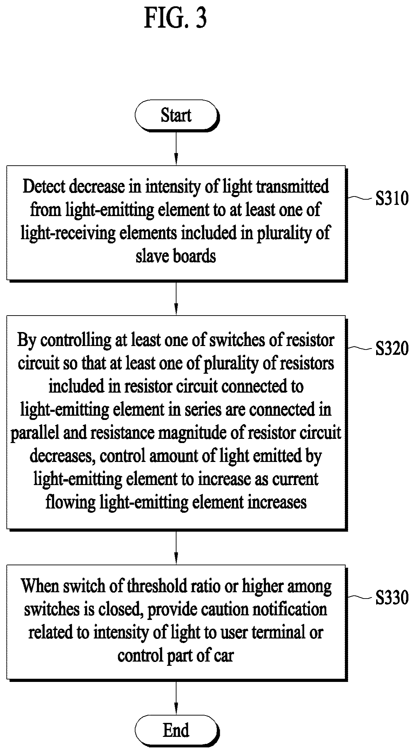

A communication management method based on the configurations of FIGS. 1 and 2 described above is described with reference to FIG. 3.

FIG. 3 is a flowchart illustrating a communication management method of a battery management system according to an example embodiment.

Referring to FIG. 3, the controller 120 may detect a decrease in intensity of light transmitted from the light-emitting element 110 to at least one of light-receiving elements included in a plurality of slave boards (operation S310). Subsequently, the controller 120 may, by controlling at least one of the plurality of switches 132-1 to 132-N of the resistor circuit 130 so that at least one of a plurality of resistors included in the resistor circuit 130 connected to the light-emitting element 110 in series are connected in parallel and a resistance magnitude of the resistor circuit 130 decreases, control an amount of light emitted by the light-emitting element to increase as a current flowing the light-emitting element 110 increases (operation S320). In addition, the controller 120 may, when a switch of a threshold ratio or higher among the plurality of switches 132-1 to 132-N is closed, provide a caution notification related to the intensity of the light to a user terminal or a control part of a car (operation S330). Hereinafter, each operation and a configuration for performing the operation are described more specifically.

First, the controller 120 may detect a decrease in intensity of light transmitted from the light-emitting element 110 to at least one of light-receiving elements included in a plurality of slave boards. Here, the decrease in the intensity of the light may be detected through one in two manners.

According to an example embodiment, the decrease in the intensity of the light may be identified by detecting a decrease in a magnitude of a current generated as the light emitted from the light-emitting element 110 is transmitted to the at least one of the light-receiving elements. In other words, in optical communication within a close distance as above, a current generated based on a photoelectric effect generated by light transmitted is detected and recognized as a digital signal, and when the intensity of the light transmitted becomes weak, the corresponding current may decrease, and thus, a decrease in a magnitude of the current generated as the light is transmitted may be detected as a decrease in the intensity of the light. As an example, the magnitude of the corresponding current may be regarded as the intensity of the light. Therefore, by periodically measuring the magnitude of the current generated as the at least one of the light-receiving elements of the slave boards receive the light from the light-emitting element, it may be determined that the decrease in the intensity of the light occurs when the corresponding magnitude of the current is less than or equal to a threshold value.

According to another example embodiment, the decrease in the intensity of the light may be detected by identifying disconnection of communication connected as the light from the light-emitting element 110 is transmitted to the at least one of the light-receiving elements. In other words, the controller 120 may determine, when a current is measured as weak enough for communication to be disconnected, that the intensity of the light is decreased. The above manner has the advantage of no occurrence of additional loads throughout the battery management system 100.

Subsequently, when the decrease in the intensity of the light transmitted to the light-receiving elements of the slave boards is detected, the controller 120 may, in response thereto, connect at least one of a plurality of resistors in parallel. In other words, the controller 120 may close at least one of the switches 132-1 to 132-N of FIG. 2 so that a resistance magnitude of the resistor circuit 130 decreases as at least one of the resistors 131-1 to 131-N corresponding to the closed switches are connected in parallel. In this case, since the resistance magnitude of the resistor circuit 130 connected to the light-emitting element 110 in series decreases, a current flowing in the light-emitting element 110 increases. When the current flowing in the light-emitting element 110 increases, an amount of light emitted by the light-emitting element 110 may increase, and accordingly, the intensity of the light transmitted to the light-receiving element may increase. Such process may be performed whenever the decrease in the intensity of the light is detected. Therefore, the plurality of switches 132-1 to 132-N may be sequentially controlled and closed, and in turn, the plurality of resistors 131-1 to 131-N corresponding thereto may also be sequentially connected in parallel, and the resistance magnitude may also decrease sequentially.

According to an example embodiment, the controller 120 may, whenever the decrease in the intensity of the light is detected, close each of the switches 132-1 to 132-N of the resistor circuit 130 one by one. The above example embodiment has the advantage of applying less calculation-related loads to the battery management system 100 since the switches are controlled based on a simple logic. In this case, according to a more direct example embodiment, the resistor circuit 130 may have the plurality of resistors 131-1 to 131-N with an identical resistance magnitude, and each of the switches 132-1 to 132-N may be closed one by one whenever the decrease in the intensity of the light is detected. Alternatively, the plurality of resistors 131-1 to 131-N may have a less resistance magnitude as being connected later, and thus, the current flowing in the light-emitting element 110 may increase to a greater extent. The configurations of the resistors described above are merely examples and may be used in various manners depending on the intent of a designer.

According to an example embodiment, the controller 120 may control the at least one of the switches so that the current for the intensity of the light to become an initial value may flow in the light-emitting element 110. In other words, the controller 120 may select and control the at least one of the switches corresponding to the plurality of resistors for the intensity of the light to be identical to the initial. In this case, there is an advantage of transmitting the light to the light-receiving element in the intensity of the light corresponding to the initial value more accurately.

More specifically, the controller 120 may select the at least one of the plurality of resistors 131-1 to 131-N based on the intensity of the light in which the decrease is detected and the initial value. As described above, the intensity of the light transmitted to the light-receiving element may be measured as the magnitude of the current based on the photoelectric effect generated by the light. Therefore, the intensity of the light in which the decrease is detected and the initial value mentioned as above may correspond to the magnitude of the current in the light-receiving element. In other words, the intensity of the light in which the decrease is detected may correspond to the magnitude of the current generated in the light-receiving element at a corresponding time point, and the initial value may correspond to the magnitude of the current generated in the light-receiving element by the light from the light-emitting element at an initial time point when all environments are normal.

According to an example embodiment, the controller 120 may, based on the intensity of the light in which the decrease is detected and the initial value which are measured as above, calculate how much weaker the intensity of the light becomes compared to the initial value as a ratio, and based on the corresponding ratio, calculate how much more current needs to flow in the light-emitting element, and corresponding thereto, calculate the resistance magnitude that the resistor circuit 130 is required to have, in other words, a recovery value. For example, the recovery value may also be calculated by multiplying the ratio between the intensity of the light and the initial value described above by the initial load resistor 131-0. In this case, when the resistor circuit 130 has the resistance magnitude corresponding to the recovery value, the current flowing in the light-emitting element may increase by a reciprocal of the ratio between the intensity of the light and the initial value described above, and accordingly, an amount of light emitted may increase and the intensity of the light transmitted to the light-receiving element may increase. Accordingly, the controller 120 may select the at least one of the plurality of resistors 131-1 to 131-N, when connected in parallel, for the resistance magnitude of the resistor circuit 130 to correspond to the recovery value, which are included in the resistor circuit 130, and control the at least one of the plurality of switches 132-1 to 132-N corresponding thereto. In this case, a configuration of the plurality of resistors 131-1 to 131-N may be configured in various manners depending on the intent of a designer. For example, by enabling resistors to be finely adjusted when connected in parallel, many resistors of larger resistances than the load resistor 131-0 may also be included to achieve a maximum efficiency for a balance between communication qualities and additional power consumption, and many resistors of smaller resistances than the load resistor 131-0 may also be included to improve communication qualities immediately.

According to an example embodiment, the controller 120 may record the intensity of the light at each measurement time point in time series, and based thereon, calculate a rate of change of the intensity of the light, and then based on the rate of change, select the at least one of the plurality of resistors. As an example, the controller 120 may select the resistors so that the resistance magnitude of the resistor circuit 130 may be less as the rate of change is greater. In other words, the controller 120 may control the resistor circuit 130 so that the intensity of the light transmitted to the light-receiving element 210 corresponds to the initial value but decrease more the resistance magnitude additionally as the rate of change is greater and thus may respond more preemptively to the potential deterioration of communication qualities. In this case, the intensity of the light transmitted to the light-receiving element 210 may also be greater than the initial value temporarily.

As described above, the controller 120 may control the at least one of the plurality of switches 132-1 to 132-N to increase the amount of light emitted by the light-emitting element 110 through the control of the resistor circuit 130. Such control may be performed whenever the decrease in the intensity of the light is detected, and when the decrease in the intensity of the light is continually detected, a large number of the switches 132-1 to 132-N may be closed. In this case, when a switch of a threshold ratio or higher among the switches 132-1 to 132-N is closed, the controller 120 may provide a caution notification related to the intensity of the light to a user terminal through the communication part 140. When the battery management system 100 and a battery pack operating in interconnection therewith are installed in a car, the caution notification may be provided to the user terminal or a control part of the corresponding car.

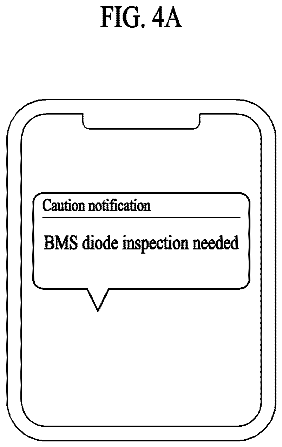

According to an example embodiment, the caution notification may basically include information indicating that a communication issue may occur as the intensity of the light decreases. An example embodiment of such caution notification is described with reference to FIGS. 4A to 4C.

FIGS. 4A to 4C are example diagrams of a caution notification sent to a user terminal according to an example embodiment.

First, referring to FIG. 4A, as a basic example embodiment, a case in which a caution notification includes information indicating that a diode of a battery management system (BMS) needs to be inspected may be identified.

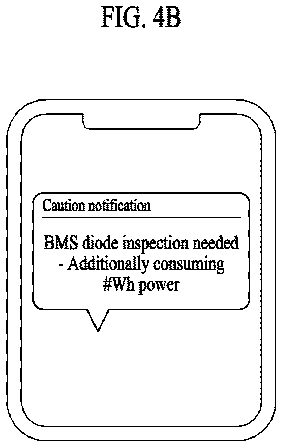

Next, referring to FIG. 4B, as an additional example embodiment, a case in which the caution notification includes power information, in other words, the expression "Additionally consuming #Wh power" may be identified. In other words, the controller 120 may provide the caution notification including information on power consumed in the resistor circuit 130 in a state that a switch of a threshold ratio or higher is closed to a user terminal or a control part of a car. In other words, as resistors are sequentially connected in parallel for more currents to flow in the light-emitting element 110, the resistor circuit may consume more and more power, which may cause a problem of consuming battery capacity too quickly. To resolve this, by resolving a cause that leads light not to be transmitted properly to a light-receiving element, the light may be transmitted properly to the light-receiving element without the introduction of additional currents, and then, switches of the resistors connected in parallel are to be re-opened and disconnected. To induce the rapid resolution of such cause, the controller 120 may transmit the caution notification including the information on power together to the user terminal as in FIG. 4B.

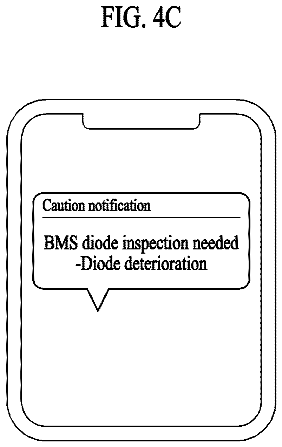

Further, referring to FIG. 4C, as an additional example embodiment, a case in which the caution notification includes cause information may be identified. The cause information may include information on a cause of a decrease in intensity of light transmitted to the light-receiving element 210. An example of the cause information may include condensation or dust, together with deterioration of a light-emitting element (diode) as in FIG. 4C. According to an example embodiment, the controller 120 may, when it is determined that an issue such as condensation or dust is not present, determine the deterioration of the light-emitting element as the cause. Such process of identifying the cause information is described below.

First, according to an example embodiment, the controller 120 may be configured to identify cause information about the decrease in the intensity of the light based on at least one of information on turbidity and information on condensation within a battery pack, which are obtained based on one or more sensors included in the battery pack operating in interconnection with the battery management system 100. When a turbidity degree or a condensation amount is greater than or equal to a threshold value, the controller 120 may identify a corresponding matter as the cause information.

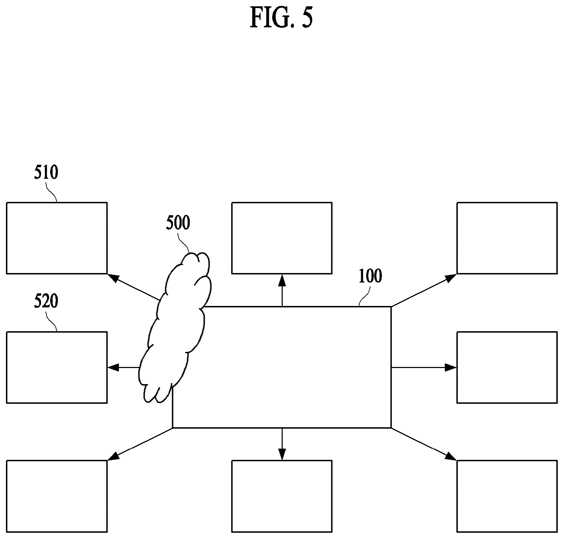

Alternatively, according to an example embodiment, the controller 120 may be configured to identify the cause information about the decrease in the intensity of the light based on at least one of (i) decrease information about a decrease amount of a magnitude of a current generated as the light from the light-emitting element 110 is received, which is detected in a specific light-receiving element that is at least one of a light-receiving elements included in a plurality of slave boards, (ii) information on a location of the specific light-receiving element, and (iii) information on a ratio of the number of the specific light-receiving element to the number of the light-receiving elements. Such example embodiment is described with reference to FIG. 5.

FIG. 5 is an example diagram illustrating a case in which light from a light-emitting element is not transmitted only to a slave board in some directions due to an obstruction factor according to an example embodiment.

When a cause of a decrease in intensity of light is deterioration of the light-emitting element 110, it may be detected that the intensity of the light decreases throughout light-receiving elements. However, when the intensity of the light decreases due to other environmental factors such as condensation or dust, as in FIG. 5, it may be expected that the intensity of the light is detected as decreasing only in light-receiving elements 510 and 520 in a specific direction, in other words, in a direction where condensation or dust 500 is located or the intensity of the light is detected as decreasing to a particularly greater extent therein. Therefore, based on at least one of the decrease information, the information on the location, and the information on the ratio described above, it may be determined whether the decrease in the intensity of the light occurs throughout the light-receiving elements or occurs only in the light-receiving element in the specific direction, and the deterioration of the light-emitting element in the former case and an internal environmental issue in the latter case may be identified as cause information.

Here, when the deterioration of the light-emitting element is an issue, the cause may be resolved only by replacing the light-emitting element, but when the internal environmental factor such as condensation or dust is an issue, the issue may also be resolved independently by the operation of the battery management system 100. In other words, the issue may be resolved by increasing temperatures when condensation is the issue and by ventilating when dust is the issue. When the issue is resolved independently as above, the controller 120 may identify whether a cause corresponding to the cause information is resolved based on at least one of the information on turbidity and the information on condensation within the battery pack, which are obtained through the sensor described above. In other words, a value obtained through the sensor may be changed by the independent operation described above and recovered to a normal range, and in response thereto, the controller 120 may control at least one of the switches 132-1 to 132-N so that at least one of the plurality of resistors 131-1 to 131-N connected in parallel are disconnected. Through this, unnecessary power consumption may be prevented and communication connection may be maintained.

The example embodiments may be represented by functional block elements and various processing steps. The functional blocks may be implemented in any number of hardware and/or software configurations that perform specific functions. For example, an example embodiment may adopt integrated circuit configurations, such as memory, processing, logic, and/or look-up table, that may execute various functions by the control of one or more microprocessors or other control devices. Similarly to that elements may be implemented as software programming or software elements, the example embodiments may be implemented in a programming or scripting language such as C, C++, Java, assembler, etc., including various algorithms implemented as a combination of data structures, processes, routines, or other programming constructs. Functional aspects may be implemented in an algorithm running on one or more processors. Further, the example embodiments may adopt the existing art for electronic environment setting, signal processing, and/or data processing. Terms such as "mechanism," "element," "means," and "configuration" may be used broadly and are not limited to mechanical and physical configurations. The terms may include the meaning of a series of routines of software in association with a processor or the like.

The above-described example embodiments are merely examples, and other example embodiments may be implemented within the scope of the claims to be described later.

## Claims

1. A battery management system that is a master board and in communication with a plurality of slave boards, the battery management system comprising:
a light-emitting element configured to perform wireless communication with the plurality of slave boards including light-receiving elements;
a resistor circuit connected to the light-emitting element in series and including a plurality of resistors connectable in parallel to each other based on opening and closing of switches; and
a controller,
wherein the controller is configured to,
in response to detecting a decrease in intensity of light transmitted from the light-emitting element to at least one of the light-receiving elements, control at least one of the switches so that a resistance magnitude of the resistor circuit decreases by connecting at least one of the plurality of resistors in parallel.

2. The battery management system of claim 1,
wherein an amount of light emitted by the light-emitting element increases as the resistance magnitude of the resistor circuit decreases and a current flowing in the light-emitting element increases.

3. The battery management system of claim 2,
wherein the controller is configured to, in response to detecting the decrease in the intensity of the light, control the at least one of the switches so that the current for the intensity of the light transmitted to the at least one of the light-receiving elements to correspond to an initial value flows in the light-emitting element.

4. The battery management system of claim 3,
wherein the controller is configured to control the at least one of the switches so that the at least one of the plurality of resistors selected based on the intensity of the light in which the decrease is detected and the initial value are connected in parallel.

5. The battery management system of claim 4,
wherein the controller is configured to calculate a recovery value based on the intensity of the light and the initial value and then select the at least one of the plurality of resistors, when connected in parallel, for the resistance magnitude of the resistor circuit to correspond to the recovery value.

6. The battery management system of claim 4,
wherein the controller is configured to select the at least one of the plurality of resistors further based on a rate of change of the intensity of the light but select the at least one of the plurality of resistors so that the resistance magnitude is less as the rate of change is greater.

7. The battery management system of claim 1,
wherein the decrease in the intensity of the light is identified by detecting a decrease to or below a threshold value in a magnitude of a current generated as the light from the light-emitting element is transmitted to the at least one of the light-receiving elements.

8. The battery management system of claim 7,
wherein the decrease in the magnitude of the current is detected by periodically measuring the magnitude of the current generated as the at least one of the light-receiving elements receive the light from the light-emitting element.

9. The battery management system of claim 1,
wherein the decrease in the intensity of the light is detected by identifying disconnection of communication connected as the light from the light-emitting element is transmitted to the at least one of the light-receiving elements.

10. The battery management system of claim 1,
wherein the controller is configured to identify cause information about the decrease in the intensity of the light based on at least one of (i) decrease information about a decrease amount of a magnitude of a current generated as the light from the light-emitting element is received, which is detected in a specific light-receiving element that is the at least one of the light-receiving elements, (ii) information on a location of the specific light-receiving element, and (iii) information on a ratio of a number of the specific light-receiving element to a number of the light-receiving elements.

11. The battery management system of claim 1,
wherein the controller is configured to identify cause information about the decrease in the intensity of the light based on at least one of information on turbidity and information on condensation within a battery pack, which are obtained based on one or more sensors included in the battery pack operating in interconnection with the battery management system.

12. The battery management system of claim 11,
wherein the controller is configured to, when it is identified based on at least one of the information on turbidity and the information on condensation within the battery pack that a cause corresponding to the cause information is resolved, control the at least one of the switches so that the at least one of the plurality of resistors connected in parallel are disconnected.

13. The battery management system of claim 1,
further comprising a communication part communication-connected to a user terminal or a control part of a car,
wherein the controller is configured to, when a switch of a threshold ratio or higher among the switches of the resistor circuit is closed, provide a caution notification related to the intensity of the light to the user terminal or the control part of the car through the communication part.

14. The battery management system of claim 13,
wherein the controller is configured to provide the caution notification including cause information about the decrease in the intensity of the light to the user terminal or the control part of the car.

15. The battery management system of claim 13,
wherein the controller is configured to provide the caution notification including information on power consumed in the resistor circuit in a state that the switch of the threshold ratio or higher is closed to the user terminal or the control part of the car.

16. The battery management system of claim 1,
wherein the controller is configured to sequentially control the at least one of the switches so that the resistance magnitude of the resistor circuit decreases sequentially by sequentially connecting the at least one of the plurality of resistors in parallel whenever the decrease in the intensity of the light is detected.

17. A communication management method of a battery management system, the communication management method comprising:
detecting a decrease in intensity of light transmitted from a light-emitting element to at least one of light-receiving elements included in a plurality of slave boards;
by controlling at least one of switches of a resistor circuit so that at least one of a plurality of resistors included in the resistor circuit connected to the light-emitting element in series are connected in parallel and a resistance magnitude of the resistor circuit decreases, controlling an amount of light emitted by the light-emitting element to increase as a current flowing in the light-emitting element increases; and
when a switch of a threshold ratio or higher among the switches is closed, providing a caution notification related to the intensity of the light to a user terminal or a control part of a car.
